# FASCICULE DE BREVET EUROPEEN

(11) **EP 1 264 997 B1**
(45) Date de publication et mention de la délivrance du brevet: **31.08.2005**
(21) Numéro de dépôt: 02291391.7
(22) Date de dépôt: 06.06.2002
(51) Int. Cl.: F16C 33/14, F16C 33/20

(54) **Procédé de réalisation d'un palier lisse muni d'un revétement de frottement**
Verfahren zur Herstellung eines Gleitlagers mit einem Reibungsbelag
Manufacturing process of a sliding bearing having a friction layer

(30) Priorité: 07.06.2001 FR 0107414
(43) Date de publication de la demande: 11.12.2002
(73) Titulaire: HISPANO SUIZA, 92700 Colombes (FR); Jsc N.D. Kuznetsov Stc, Samara 443010 (RU)
(72) Inventeur: Becquerelle, Samuel Raymond Germain, 78110 Le Vesinet (FR); Butarov, Alexander, 443026 Samara (RU); Fedorchenko, Dimitry, 443026 Samara (RU); Fomin, Michael, 443026 Samara (RU); Peiron, Benjamin Arthur Marie, 75015 Paris (FR); Ville, Daniel Victor Marcel, 92360 Meudon la Forét (FR)
(74) Mandataire: Nguyen, Dominique

(56) Documents cités:
- GB-A- 2 185 697
- GB-A- 2 321 676
- US-A- 5 780 396
- US-B1- 6 178 639

## Description

La présente invention concerne un palier lisse muni d'un revêtement de frottement ainsi que le procédé de réalisation dudit revêtement.

Des paliers lisses à hautes performances sont nécessaires dans divers domaines et notamment dans les réducteurs de turboréacteur à haut taux de dilution.

La recherche de hautes performances a conduit à proposer diverses améliorations aux paliers lisses. Ainsi, US 3 644 105 décrit un palier comportant un revêtement composite de cuivre et de bisulfure de molybdène obtenu par co-déposition électrolytique. Une couche superficielle constituée d'un alliage à base de plomb contenant de l'étain et du cuivre complète le revêtement.

Les solutions connues antérieures ne donnent pas toutefois entière satisfaction et notamment dans les applications notées ci-dessus le besoin subsiste de mettre au point des paliers lisses permettant de bonnes conditions de fonctionnement et une bonne tenue en service dans les conditions sévères d'utilisation correspondantes. Ces conditions comportent notamment une résistance à de très fortes pressions, un fonctionnement à des vitesses linéaires importantes, une résistance à des températures élevées et les paliers lisses doivent également être capables de fonctionner avec une lubrification par une huile à faible viscosité et pendant de courtes périodes sans huile.

Ces résultats sont obtenus de manière satisfaisante selon l'invention par un palier lisse à hautes performances muni d'un revêtement de frottement caractérisé en ce que le revêtement comporte une couche de bronze obtenue par frittage et dont les pores sont remplis d'une pâte fluoroplastique chargée de bisulfure de molybdène Ledit revêtement de frottement est obtenu de manière remarquable conforme à l'invention grâce à un procédé caractérisé en ce qu'il comporte les étapes suivantes :
(a) frittage d'une couche de poudre de bronze sur un support métallique sous une atmosphère réductrice au moyen d'un outillage comportant un revêtement anti-adhésif et résistant à l'usure ;
(b) nettoyage ionique sous vide pour l'activation de la surface de la couche de bronze frittée sans augmentation de la rugosité de la couche ;
(c) application d'une couche de pâte fluoroplastique du type PTFE chargée de bisulfure de molybdène sur la surface en bronze frittée et mise en place du support revêtu de la couche de bronze frittée dans une filière ;
(d) passage de la pièce constituée du support métallique revêtu dans la filière avec adjonction d'un revêtement anti-adhésif et résistant à l'usure de manière à obtenir la compression de la pâte appliquée à l'étape (c) dans les pores de la couche de bronze frittée ;
(e) séchage de la pâte ;
(f) second passage de la pièce dans la filière avec adjonction d'un revêtement anti-adhésif et résistant à l'usure ;
(g) frittage de la pâte dans des conditions déterminées de durée et température suivi d'une immersion dans l'eau ;
(h) passage final de la pièce de palier pour mise aux dimensions finales dans une filière munie d'un revêtement anti-adhésif.

Des conditions particulières de réalisation et des paramètres avantageux sont également déterminés.

Des avantages de l'invention seront mieux compris à la lecture de la description qui va suivre d'un exemple de réalisation de l'invention, en référence aux dessins annexés sur lesquels :
- la figure 1 représente selon une vue en coupe longitudinale le support métallique du palier lisse conforme à l'invention lors d'une étape de sa réalisation ;
- la figure 2 représente selon une vue en coupe longitudinale le support métallique du palier lisse conforme à l'invention lors d'une autre étape de sa réalisation.

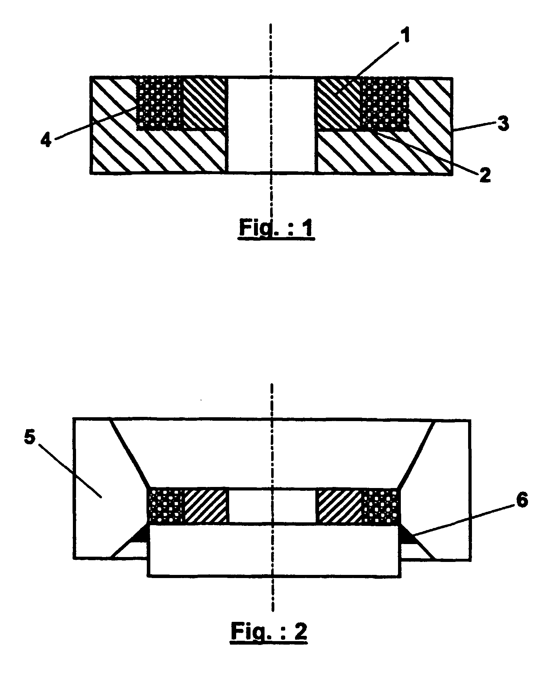

Un palier lisse notamment destiné à des applications aéronautiques telles que dans les réducteurs de turboréacteur à haut taux de dilution comporte de manière classique un support métallique schématiquement représenté en 1 sur la figure 1. Le procédé de réalisation d'un revêtement de frottement sur un palier lisse conforme à l'invention comporte une étape préalable :

### (a1) dépôt électrolytique d'une couche 2 de cuivre sur le support métallique 1, suivi d'un étamage.

Comme représenté sur la figure 1, le support métallique 1 ainsi revêtu est ensuite placé dans un conteneur 3, en ménageant autour du support 1 un réceptacle où est placée de la poudre de bronze pour la réalisation de l'étape (a) du procédé conforme à l'invention :
(a) frittage d'une couche 4 de poudre de bronze sur le support métallique 1, dans des conditions connues en soi de température et d'atmosphère réductrice et en utilisant un outillage comportant un revêtement anti-adhésif et résistant à l'usure.

L'étape (b) suivante dudit procédé consiste en un nettoyage ionique sous vide de manière à obtenir une activation de la couche de bronze frittée.

A l'étape (c), on applique sur toute la surface de bronze frittée une couche d'environ 1mm d'épaisseur de pâte fluoroplastique du type PTFE polytétrafluoroéthylène chargée de bisulfure de molybdène et le support 1 revêtu de la couche 4 de bronze frittée est ensuite mis en place dans une filière 5, telle que schématiquement représentée sur la figure 2 ; ensuite à l'étape (d), la pièce 1 constituée du support métallique revêtu est passée à travers la filière 5 avec adjonction d'un revêtement 6 anti-adhésif et résistant à l'usure, de manière à obtenir la compression de la pâte appliquée à l'étape (c) dans les pores de la couche de bronze frittée. Le revêtement utilisé peut notamment être à base de nitrure de titane ou un revêtement à propriétés équivalentes tel qu'à base de nitrure de zirconium, de chrome ou éventuellement d'aluminium. Ce revêtement évite le frittage du bronze sur l'outillage et évite les inconvénients d'autres produits précédemment connus tels que le graphite qui entraîne une contamination du bronze et détériore l'adhérence du bronze sur le matériau métallique du support. Le même revêtement est utilisé également à l'étape (a) lors du frittage pour les mêmes raisons.

A l'étape (e) suivante, on procède à un séchage de la pâte, qui peut par exemple être réalisé à 90 °C pendant deux heures. A l'étape (f) une mise en forme de la pièce 1 de palier est obtenue par un second passage dans la filière avec adjonction du revêtement anti-adhésif et anti-usure tel que défini précédemment. On procède ensuite à l'étape (g) au frittage de la pâte dans des conditions déterminées telles que à 375°C pendant 40 minutes et la pièce est ensuite immergée dans l'eau.

Enfin, à l'étape finale (h) la pièce 1 de palier est passée dans la filière toujours munie du revêtement anti-adhésif pour une mise aux dimensions finales.

Aucune reprise d'usinage du palier lisse ainsi obtenu n'est nécessaire. Les qualités d'adhérence sur le support et les qualités d'anti-friction du revêtement conforme à l'invention ainsi obtenu permettent au palier lisse de satisfaire les hautes performances exigées par son fonctionnement. Notamment, le palier lisse obtenu résiste à de très fortes pressions pouvant dépasser 50 MPa dans le film d'huile. Il peut fonctionner à des vitesses linéaires importantes et à des températures jusqu'à 120°C. Il accepte de l'huile à faible viscosité, jusqu'à 5x10⁻⁶ m²/s à 100°C et le palier est capable de fonctionner sans huile pendant de courtes périodes, à charges réduites.

## Revendications

1. Procédé de réalisation d'un revêtement de frottement sur un palier lisse à hautes performances **caractérisé en ce qu'**il comporte les étapes suivantes :
(a) frittage d'une couche de poudre de bronze sur un support métallique sous une atmosphère réductrice au moyen d'un outillage comportant un revêtement anti-adhésif et résistant à l'usure ;
(b) nettoyage ionique sous vide pour l'activation de la surface de la couche de bronze frittée sans augmentation de la rugosité de la couche ;
(c) application d'une couche de pâte fluoroplastique du type PTFE chargée de bisulfure de molybdène sur la surface en bronze frittée et mise en place du support revêtu de la couche de bronze frittée dans une filière ;
(d) passage de la pièce constituée du support métallique revêtu dans une filière avec adjonction d'un revêtement anti-adhésif et résistant à l'usure de manière à obtenir la compression de la pâte appliquée à l'étape (c) dans les pores de la couche de bronze frittée ;
(e) séchage de la pâte ;
(f) second passage de la pièce dans la filière avec adjonction d'un revêtement anti-adhésif et résistant à l'usure;
(g) frittage de la pâte dans des conditions déterminées de durée et température suivi d'une immersion dans l'eau ;
(h) passage final de la pièce de palier pour mise aux dimensions finales dans une filière munie d'un revêtement anti-adhésif.

2. Procédé de réalisation d'un revêtement de frottement sur un palier lisse selon la revendication 1 **caractérisé en ce que** le revêtement anti-adhésif et résistant à l'usure utilisé lors des étapes (a), (d), (f) et (h) est à base de nitrure de titane ou d'un nitrure à propriétés équivalentes tel que nitrure de zirconium, de chrome ou d'aluminium ;

3. Procédé de réalisation d'un revêtement de frottement sur un palier lisse selon l'une des revendications 1 ou 2 **caractérisé en ce qu'**à l'étape (e) le séchage de la pâte est effectué à 90° C pendant 2 heures et à l'étape (g) le frittage de la pâte est effectué à 375°C pendant 40 minutes.

4. Procédé de réalisation d'un revêtement de frottement sur un palier lisse selon l'une quelconque des revendications 1 à 3 **caractérisé en ce qu'**avant l'apport de la poudre de bronze, une étape préalable comporte :
- (a1) dépôt électrolytique de cuivre sur le support métallique dans des conditions connues en soi, suivi d'un étamage.

## Patentansprüche

1. Verfahren zum Realisieren eines Reibungs-Belags auf einem Gleitlager für hohe Leistung, **dadurch gekennzeichnet, dass** es die folgenden Schritte aufweist:
(a) Sintern einer Bronze-Pulver-Schicht auf einem Metall-Träger unter einer reduzierenden Atmosphäre mittels eines Werkzeugs, welches einen Anti-Haft-Belag aufweist und Verschleiß-resistent ist;
(b) Ionen-Reinigen unter Unterdruck zum Aktivieren der Oberfläche der Sinter-Bronze-Schicht ohne die Rauigkeit der Schicht zu vermehren;
(c) Applizieren einer mit Molybdän-Disulfid beladenen Schicht fluoroplastischer Paste vom Typ PTFE auf die Sinter-Bronze-Oberfläche und platzieren des mit der Sinter-Bronze-Schicht beschichteten Trägers in einem Halte-Teil;
(d) Überführen des gebildeten beschichteten metallischen Träger-Teils in ein Halte-Teil mit Zufügen einer Anti-Haft-Beschichtung, welche widerstandsfähig gegen Verschleiß ist, um die Kompression der in Schritt (c) applizierten Paste in die Poren der Sinter-Bronze-Schicht zu erreichen;
(e) Trocknen der Paste;
(f) zweites Überführen des Teils in das Halte-Teil mit Zufügen einer Anti-Haft-Beschichtung, welche widerstandsfähig gegen Verschleiß ist;
(g) Sintern der Paste unter festgelegten Bedingungen für Dauer und Temperatur, gefolgt von einem Abspülen in Wasser;
(h) abschließendes Überführen des Lager-Teils, um es auf Endmaße zu bringen, in ein Halte-Teil, welches mit einer Anti-Haft-Beschichtung versehen ist.

2. Verfahren zum Realisieren eines Reibungs-Belags auf einem Gleitlager gemäß Anspruch 1, **dadurch gekennzeichnet, dass** die während der Schritte (a), (d), (f) und (h) verwendete Anti-Haft-Beschichtung, welche widerstandsfähig gegen Verschleiß ist, auf Titan-Nitrid oder einem Nitrid mit äquivalenten Eigenschaften, wie Zirkon-, Chrom- oder AluminiumNitrid basiert.

3. Verfahren zum Realisieren eines Reibungs-Belags auf einem Gleitlager gemäß einem der Ansprüche 1 oder 2, **dadurch gekennzeichnet, dass** der Schritt (e) des Trocknens der Paste für 2 Stunden bei 90°C durchgeführt wird, und dass der Schritt (g) des Sinterns der Paste für 40 Minuten bei 375°C durchgeführt wird.

4. Verfahren zum Realisieren eines Reibungs-Belags auf einem Gleitlager gemäß einem der Ansprüche 1 bis 3, **dadurch gekennzeichnet, dass** vor dem Einbringen des Bronze-Pulvers ein vorheriger Schritt aufweist:
- (a1) elektrolytisches Aufbringen von Kupfer auf den Metall-Träger unter an sich bekannten Bedingungen, gefolgt von einem Verzinnen.

## Claims

1. Process for producing a friction coating on a high-performance sliding bearing, **characterized in that** it comprises the following steps:
(a) of sintering a bronze powder layer on a metal support in a reducing atmosphere by means of tooling that includes a non-stick wear-resistant coating;
(b) of vacuum ion cleaning, in order to activate the surface of the sintered bronze layer without increasing the roughness of the layer;
(c) of applying a layer of a fluoroplastic paste of the type comprising PTFE filled with molybdenum disulphide on the sintered bronze surface, and of placing the support coated with the sintered bronze layer in a die;
(d) of making the part, formed from the coated metal support, pass through the die with the addition of a non-stick, wear-resistant coating so as to compress the paste applied in step (c) into the pores of the sintered bronze layer;
(e) of drying the paste;
(f) of making the part pass a second time through the die with the addition of a non-stick, wear-resistant coating;
(g) of sintering the paste under defined time and temperature conditions followed by its immersion in water; and
(h) of making the bearing part pass a final time through a die provided with a non-stick coating in order to bring the part to the final dimensions.

2. Process for producing a friction coating on a sliding bearing according to Claim 1, **characterized in that** the non-stick, wear-resistant coating used during steps (a), (d), (f) and (h) is based on titanium nitride, or on a nitride having equivalent properties such as zirconium nitride, chromium nitride or aluminium nitride.

3. Process for producing a friction coating on a sliding bearing according to either of Claims 1 and 2, **characterized in that** the drying of the paste in step (e) is carried out at 90°C for 2 hours and the sintering of the paste in step (g) is carried out at 375°C for 40 minutes.

4. Process for producing a friction coating on a sliding bearing according to any one of Claims 1 to 3, **characterized in that**, before the bronze powder is applied, a prior step comprises:
- (a1) electroplating the metal support with copper under conditions known per se, followed by a tinning operation.
